# EUROPEAN PATENT SPECIFICATION

(11) **EP 3 873 036 B1**
(45) Date of publication and mention of the grant of the patent: **21.06.2023**
(21) Application number: 20160218.2
(22) Date of filing: 28.02.2020
(51) Int. Cl.: H04L 12/28, H04L 41/0668

(54) **METHOD FOR AN IMPROVED OPERATION OF A BROADBAND ACCESS NETWORK OF A TELECOMMUNICATIONS NETWORK AND/OR FOR AN IMPROVED AND/OR MORE RELIABLE OPERATION OF THE BROADBAND ACCESS NETWORK, BROADBAND ACCESS NETWORK OR TELECOMMUNICATIONS NETWORK, AND SYSTEM, PROGRAM AND COMPUTER-READABLE MEDIUM**
VERFAHREN ZUR VERBESSERTEN BEDIENUNG EINES BREITBANDZUGANGSNETZES EINES TELEKOMMUNIKATIONSNETZES UND/ODER FÜR EINE VERBESSERTE UND/ODER ZUVERLÄSSIGERE BEDIENUNG DES BREITBANDZUGANGSNETZES, BREITBANDZUGANGSNETZ ODER TELEKOMMUNIKATIONSNETZ SOWIE SYSTEM, PROGRAMM UND COMPUTERLESBARES MEDIUM
PROCÉDÉ POUR AMÉLIORER LE FONCTIONNEMENT D'UN RÉSEAU D'ACCÈS À LARGE BANDE D'UN RÉSEAU DE TÉLÉCOMMUNICATIONS ET/OU POUR UN FONCTIONNEMENT AMÉLIORÉ ET/OU PLUS FIABLE DU RÉSEAU D'ACCÈS LARGE BANDE, RÉSEAU D'ACCÈS LARGE BANDE OU RÉSEAU DE TÉLÉCOMMUNICATIONS, ET SYSTÈME, PROGRAMME ET SUPPORT LISIBLE PAR ORDINATEUR

(43) Date of publication of application: 01.09.2021
(73) Proprietor: Deutsche Telekom AG, 53113 Bonn (DE)
(72) Inventor: KOLBE, Hans-Jörg, 64295 Darmstadt (DE); HAAG, Thomas, 63110 Rodgau (DE)
(74) Representative: Schwöbel, Thilo K.

(56) References cited:
- WO-A1-2013/144746
- WO-A1-2018/192884
- US-A1- 2011 134 931
- US-A1- 2018 352 036

## Description

### BACKGROUND

The present invention relates a method for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node.

Furthermore, the present invention relates to a broadband access network or telecommunications network for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node.

Additionally, the present invention relates to a service edge network node for an improved operation of an inventive broadband access network of an inventive telecommunications network and/or for an improved and/or more reliable operation of the inventive broadband access network.

Additionally, the present invention relates to a system for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node.

Furthermore, the present invention relates to a program and a computer-readable medium for an improved operation of a broadband access network of a telecommunications network and/or for an improved and/or more reliable operation of the broadband access network.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known or current central office point of delivery design architecture(s), the service edge node or service edge functionality is often a single point of failure as it typically terminates the subscriber session and/or corresponds to a termination of a layer 2 tunnel from the subscriber's customer premises equipment (or corresponding device or entity). Hence, an efficient way of realizing a more reliable operation is required.

### SUMMARY

An object of the present invention is to provide a technically simple, effective and cost effective solution for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node. A further object of the present invention is to provide a corresponding broadband access network or telecommunications network, a corresponding service edge network node and a corresponding system for an improved operation of a broadband access network of a telecommunications network and/or for an improved and/or more reliable operation of the broadband access network.

The object of the present invention is achieved by a method for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node,
wherein a first service edge network node and a second service edge network node comprises, respectively, a forwarding hardware part or module, and a control hardware part or module, wherein the at least one service edge instance or functionality, realized within or by the first service edge network node and being operational at a point in time, corresponds to a state information, at or for that point in time, both in the forwarding hardware part or module, and in the control hardware part or module of the first service edge network node,
wherein in order for an improved and/or more reliable operation of the central office point of delivery, the method comprises the following steps:
   -- in a first step, the state information regarding the at least one service edge instance or functionality realized within or by the first service edge network node is continuously synced at least to the control hardware part or module of the second service edge network node,
   -- in a second step, subsequent to the first step and in case of failure of the first service edge network node, the second service edge network node realizes the at least one service edge instance or functionality - previously realized within or by the first service edge network node - by means of using the continuously synced state information wherein during a first sub-step of the second step and in case of failure of the first service edge network node, prioritized user traffic is routed via the control hardware part or module of the second service edge network node.

It is thereby advantageously possible according to the present invention to provide a solution such that it is avoided that the service edge instance or functionality is a single point of failure. Thereby, it is advantageously possible to provide for a more reliable operation of the broadband access network. Especially, it is advantageously possible according to the present invention that a higher level of redundancy is able to be provided regarding the service edge instance or functionality and/or at a network node where the subscriber tunnels (typically PPPoE, point-to-point-protocol over Ethernet or IPoE, internet protocol over Ethernet) over any layer 2 technology are terminated.

According to the present invention, the broadband access network typically comprises a central office point of delivery with a plurality of service edge network nodes, each one of the service edge network nodes realizing at least one service edge instance or functionality, terminating a customer communication link towards a customer premises equipment or an access node. In the context of the present invention, especially a first service edge network node and a second service edge network node are considered, both of which comprise, respectively, a forwarding hardware part or module, and a control hardware part or module. The at least one service edge instance or functionality, realized within or by the first service edge network node and being operational at a point in time, corresponds to a state information, at or for that point in time, both in the forwarding hardware part or module, and in the control hardware part or module of the first service edge network node. According to the present invention, in order for an improved and/or more reliable operation of the central office point of delivery, the method comprises the steps of continuously syncing the state information (regarding the at least one service edge instance or functionality realized within or by the first service edge network node) at least to the control hardware part or module of the second service edge network node, and, in case of failure of the first service edge network node, the second service edge network node realizing the at least one service edge instance or functionality - previously realized within or by the first service edge network node - by means of using the continuously synced state information.

According to the present invention, a solution is provided for the problem of writing a state information quickly to the forwarding hardware part or module. In conventionally known virtualized environments (such as server-based virtual network functions), there typically exist multiple ways to provide redundancy, e.g. in the form of session cloning, or in the form of n:1, of n:m redundancy, etc. In such a scenario, it is rather easy to clone the state (i.e. a state information) between two instances of a network node (e.g. a service edge network node) and then, in case of a failure, route the corresponding or affected tunnels (i.e. subscriber sessions) to another network node (in the considered case typically another service edge network node or instance) that takes over the handling of these sessions. The reason for this is that writing the forwarding state (i.e. corresponding to the state information) on x86 architectures is able to be conducted very fast. However, in the scenario considered according to the present invention, the service edge network nodes comprise a forwarding hardware part or module and a control hardware part or module, wherein the forwarding hardware part or module is typically an ASIC (application specific integrated circuit) or another type of chipset such as a FPGA (field programmable gate array), typically having the property of being able to very quickly perform specialized tasks (for which such circuits are intended and provided) but having also the property that writing state information to or onto such ASICs or other chipsets as FPGAs is comparatively time-consuming. Hence, even in case a redundant (service edge) network node would be held present (for every considered operational (service edge) network node), it would be hard if not impossible to continuously keep the state of the redundant network node in sync with the operational network node.

According to a further preferred embodiment of the present invention or according to further embodiments, multiple ASICs, i.e. multiple separate ASICs, might be part on one board, i.e. on one service edge network node; of course, this can be the case for a certain number of the plurality of service edge network nodes. In such an embodiment, the multiple ASICs collectively form the forwarding hardware part or module (of the respective service edge network node or service edge network nodes).

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

Furthermore, it is advantageously possible and preferred according to the present invention that in the first sub-step of the second step, subsequent to the first step and in case of failure or scheduled downtime of the first service edge network node, the method comprises the synced state information being present only in or at least primarily in the control hardware part or module of the second service edge network node, whereas the synced state information being at least not completely present in the forwarding hardware part or module of the second service edge network node, and the second service edge network node partly realizing the at least one service edge instance or functionality previously realized within or by the first service edge network node, wherein in a second sub-step of the second step, subsequent to the first sub-step of the second step, the method comprises the synced state information being present both in the control hardware part or module, and in the forwarding hardware part or module of the second service edge network node, and the second service edge network node fully realizing the at least one service edge instance or functionality previously realized within or by the first service edge network node.

Thereby, it is advantageously possible according to the present invention to quickly route high priority traffic, even after a failure of the first service edge network node.

According to a further preferred embodiment of the present invention, continuously syncing, during the first step, the state information regarding the at least one service edge instance or functionality realized within or by the first service edge network node involves syncing the state information as well as any changes currently occurring regarding this state information to the control hardware part or module of the second service edge network node, especially continuously maintaining a warm standby, within the second service edge network node, of the state of the at least one service edge instance or functionality, but preferably of a plurality of service edge entities or functionalities realized within or by the first service edge network node, and especially continuously maintaining a warm standby, within the second service edge network node, of the states of a plurality of service edge entities or functionalities realized within or by the first service edge network node as well as at least one further service edge network node,
wherein especially the control hardware part or module of the first service edge network node and the control hardware part or module of the second service edge network node realize, respectively, a control plane regarding their respective first and second service edge network nodes, and wherein especially the forwarding hardware part or module of the second service edge network node is inactivated during the first step or during the warm standby,
wherein especially continuously syncing, during the first step, the state information regarding the at least one service edge instance or functionality realized within or by the first service edge network node involves syncing the state information, as well as any changes,
   -- either using an in-band communication through one of the plurality of spine network nodes,
   -- or a management network or control plane communication within the central office point of delivery, especially a bottom-of-rack switch.

Thereby, it is advantageously possible according to the present invention to provide for a more reliable operation of the inventive broadband access network.

According to a further embodiment of the present invention, during the first sub-step of the second step, subsequent to the first step and in case of failure of the first service edge network node, the method comprises the synced state information being present only in or at least primarily in the control hardware part or module of the second service edge network node, and the synced state information being at least not completely present in the forwarding hardware part or module of the second service edge network node, and the second service edge network node only partly realizing the at least one service edge instance or functionality previously realized within or by the first service edge network node,
wherein especially the second service edge network node realizes the at least one service edge instance or functionality - previously realized within or by the first service edge network node - with regard to the prioritized user traffic only, especially traffic within specific traffic classes, especially voice over IP traffic, and/or traffic regarding specific classes of customers.

Thereby, it is advantageously possible to reduce traffic interruptions as much as possible and to limit such traffic interruptions preferably to lower priority traffic and/or to higher latency traffic.

Furthermore, according to a preferred embodiment of the present invention, during the first sub-step of the second step, subsequent to the first step and in case of failure of the first service edge network node, the method comprises routing the prioritized user traffic via the control hardware part or module of the second service edge network node, by means of using data plane channels between the forwarding hardware part or module and the control hardware part or module of the second service edge network node,
wherein especially the forwarding hardware part or module of the second service edge network node is preconfigured, especially prior to the first sub-step of the second step, such that all data plane traffic is routed through the data plane channels between the forwarding hardware part or module and the control hardware part or module of the second service edge network node.

Thereby, it is advantageously possible to almost immediately recover from a failure of the first service edge network node, at least for a part of the concerned traffic.

According to a further embodiment of the present invention, during the first sub-step of the second step, subsequent to the first step and in case of failure of the first service edge network node, the method comprises progressively configuring the forwarding hardware part or module of the second service edge network node - especially by means of a control channel between the control hardware part or module and the forwarding hardware part or module of the second service edge network node - in order to realize the at least one service edge instance or functionality, previously realized within or by the first service edge network node, also regarding the lower priority user plane traffic, and thereby progressively entering or realizing the second sub-step of the second step by means of the synced state information being present both in the control hardware part or module, and in the forwarding hardware part or module of the second service edge network node.

Thereby, it is advantageously possible to progressively realize the complete functionality of the failed service edge network node.

According to a further embodiment of the present invention, in the second step, the synced state information is at first present only in or at least primarily only in the control hardware part or module of the second service edge network node - and the synced state information being not at all, or, at least not completely, present in the forwarding hardware part or module of the second service edge network node - , and the second service edge network node progressively realizing the at least one service edge instance or functionality, previously realized within or by the first service edge network node, by means of progressively configuring the forwarding hardware part or module of the second service edge network node - especially by means of a control channel between the control hardware part or module and the forwarding hardware part or module of the second service edge network node.

Thereby, it is advantageously possible to easily and effectively implement the inventive method.

Furthermore, according to an embodiment of the present invention, the central office point of delivery comprises a switching fabric, the switching fabric comprising a plurality of spine network nodes and a plurality of leaf network nodes, wherein the leaf network nodes correspond to or host or co-host the service edge network nodes,
wherein especially the central office point of delivery and/or the broadband access network comprise(s) a plurality of line termination nodes, wherein each one of the plurality of line termination nodes is connected to at least two service edge network nodes of the plurality of service edge network nodes, wherein especially each one of the plurality of service edge network nodes is connected to at least two spine network nodes of the plurality of spine network nodes.

Thereby, it is advantageously possible to easily and effectively implement the inventive method.

Furthermore, the present invention relates to a broadband access network or telecommunications network for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node,
wherein a first service edge network node and a second service edge network node comprises, respectively, a forwarding hardware part or module, and a control hardware part or module, wherein the at least one service edge instance or functionality, realized within or by the first service edge network node and being operational at a point in time, corresponds to a state information, at or for that point in time, both in the forwarding hardware part or module, and in the control hardware part or module of the first service edge network node,
wherein in order for an improved and/or more reliable operation of the central office point of delivery, the broadband access network or the telecommunications network is configured such that:
   -- the state information regarding the at least one service edge instance or functionality realized within or by the first service edge network node is continuously synced at least to the control hardware part or module of the second service edge network node,
   -- in case of failure of the first service edge network node, the second service edge network node realizes the at least one service edge instance or functionality - previously realized within or by the first service edge network node - by means of using the continuously synced state information wherein in case of failure of the first service edge network node, prioritized user traffic is routed via the control hardware part or module of the second service edge network node.

Furthermore, the present invention relates to a service edge network node for an improved operation of an inventive broadband access network of an inventive telecommunications network and/or for an improved and/or more reliable operation of the inventive broadband access network or the inventive telecommunications network.

Additionally, the present invention relates to a system for an improved operation of a broadband access network of a telecommunications network and/or for an improved and/or more reliable operation of the broadband access network, the broadband access network comprising a central office point of delivery with a plurality of service edge network nodes, each one of the service edge network nodes realizing at least one service edge instance or functionality, terminating a customer communication link towards a customer premises equipment or an access node,
wherein a first service edge network node and a second service edge network node comprises, respectively, a forwarding hardware part or module, and a control hardware part or module, wherein the at least one service edge instance or functionality, realized within or by the first service edge network node and being operational at a point in time, corresponds to a state information, at or for that point in time, both in the forwarding hardware part or module, and in the control hardware part or module of the first service edge network node,
wherein in order for an improved and/or more reliable operation of the central office point of delivery, the system is configured such that:
   -- the state information regarding the at least one service edge instance or functionality realized within or by the first service edge network node is continuously synced at least to the control hardware part or module of the second service edge network node,
   -- in case of failure of the first service edge network node, the second service edge network node realizes the at least one service edge instance or functionality - previously realized within or by the first service edge network node - by means of using the continuously synced state information wherein in case of failure of the first service edge network node, prioritized user traffic is routed via the control hardware part or module of the second service edge network node.

Still additionally, the present invention relates to a program comprising a computer readable program code which, when executed on a computer and/or on a service edge network node and/or on a network node of a switching fabric, or in part on the service edge network node and in part on a network node of a switching fabric, causes the computer and/or the service edge network node and/or the network node of the switching fabric to perform the inventive method.

Furthermore, the present invention relates to a computer-readable medium comprising instructions which when executed on a computer and/or on a service edge network node and/or on a network node of a switching fabric, or in part on the service edge network node and in part on a network node of a switching fabric, causes the computer and/or the service edge network node and/or the network node of the switching fabric to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically shows in greater detail the central office point of delivery, especially comprising a switching fabric and a certain number of components, entities and/or network nodes, as well as further entities and/or network nodes being connected to the central office point of delivery.
Figures 3, 4 and 5 schematically illustrate, respectively, two service edge network nodes at different points in time in order to illustrate the inventive method.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

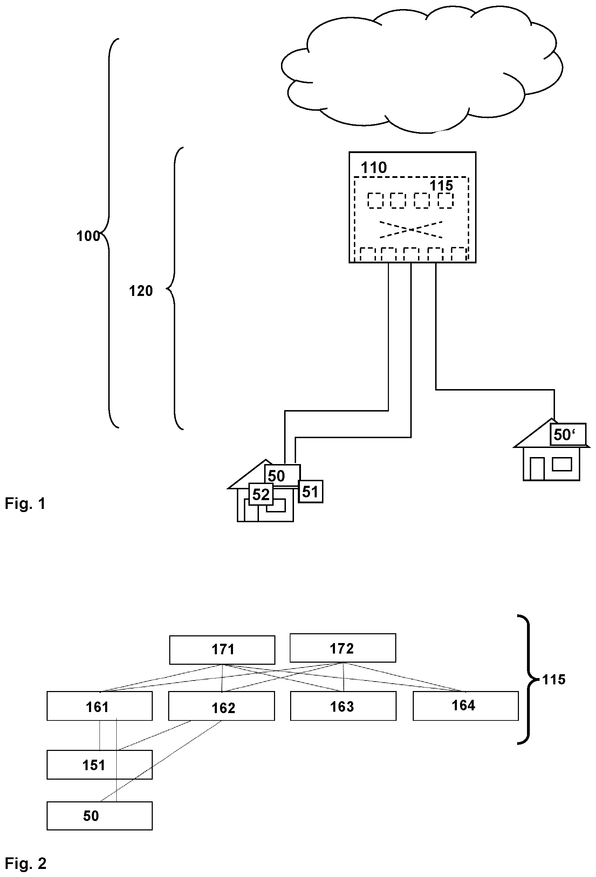

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipment or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a data center and that is especially handling different access requirements, especially different access possibilities, of the client devices 51, 52 to network functionalities provided by the telecommunications network 100 or via the telecommunications network 100. The client devices 51, 52 are typically connected to the logical or physical central office point of delivery 110 by means of a customer premises equipment device 50, 50' or by means of a customer premises equipment functionality that might be built in the client devices 51, 52. Preferably but not necessarily, the central office point of delivery 110 comprises a switching fabric 115 comprising a plurality of spine network nodes and typically also a plurality of leaf network nodes which are not explicitly represented in Figure 1.

Figure 2 schematically shows in greater detail the central office point of delivery 110 as part of the broadband access network 120 of the telecommunications network 100, the central office point of delivery 110 comprising a certain number of components, entities and/or network nodes, as well as further entities and/or network nodes being connected thereto. The represented part of the telecommunications network 100 comprises the switching fabric 115 comprising a plurality of spine network nodes 171, 172 and typically also a plurality of leaf network nodes 161, 162, 163, 164. In the exemplary representation of the telecommunications network 100 (or part thereof) in Figure 2, the leaf network nodes 161, 162, 163, 164 typically comprise or host the functionality of service edge nodes or entities. From an architectural (or network topological) perspective, these network nodes 161, 162, 163, 164 are - in the exemplary representation according to figure 2 - leaf network nodes; however, from a functional perspective, these network nodes 161, 162, 163, 164 might rather be considered to be service edge network nodes 161, 162, 163, 164. This is the reason why, in the context of the present invention, the leaf network nodes 161, 162, 163, 164 are rather called service edge network nodes 161, 162, 163, 164. Additionally, Figure 2 shows an access node 151 (being representative for, typically, a number of such access nodes or a plurality of access nodes typically present within the broadband access network 120. Such access nodes typically include line termination nodes, wherein, typically, each of the line termination nodes has one or a plurality of access node ports (not specifically illustrated in Figure 2). The line termination nodes or access nodes might be provided to support different access technologies (e.g. DSL, digital subscriber line technologies, or line termination nodes supporting to be connected to an optical network, especially a passive optical network (PON), typically a so-called optical line terminal (OLT) or optical line terminal device) to a home gateway or customer premises equipment 50, 50' (represented in Figure 1 but not in Figure 2). In such a situation, a client device 51 is connected to the telecommunications network 100 (i.e. to the access node 151) via the customer premises equipment 50 (or home gateway device 50, cf. Figure 1), and, if applicable, a network termination node (not specifically shown in Figure 2). The functionality of the customer premises equipment 50 (or home gateway device 50, cf. Figure 1) and the functionality of the network termination node might also be integrated in one device or "box". Even the functionality of the client device 51, the functionality of the customer premises equipment 50 (or home gateway device 50) and the functionality of the network termination node might be integrated in one device or "box". In addition to the switching fabric 115, the central office point of delivery 110 typically also comprises central nodes or entities providing central functionalities; however, these central nodes or entities are not specifically represented in Figure 2.

According to the present invention, a method for an improved operation of a broadband access network 120 of a telecommunications network 100 and/or for an improved and/or more reliable operation of the broadband access network 120 is provided. The broadband access network 120 comprises the central office point of delivery 110 with the switching fabric 115, the switching fabric 115 comprising the plurality of spine network nodes 171, 172 and the plurality of service edge (or leaf) network nodes 161, 162, 163, 164.

Hence, according to the present invention, the broadband access network 120 comprises the central office point of delivery 110 with a plurality of service edge network nodes 161, 162, 163, 164, each one of the service edge network nodes 161, 162, 163, 164 realizing at least one service edge instance or functionality, terminating a customer communication link towards a customer premises equipment or an access node 151 (or, typically, terminating a plurality of such customer communication links towards a plurality of customer premises equipments or access nodes). The setup or architecture of the broadband access network 120 and/or of the central office point of delivery 110 especially follows Access 4.0 principles and/or ONF's SEBA approach, i.e. the broadband access network locations consist of or comprise a network switching fabric 115 and devices connected to it at the leaf switch layer (leaf network nodes) while the spine switch layer (spine network nodes) provide the uplink to the IP core network (not represented in Figure 2). Usually, the access node 151, which is, e.g., an OLT but can also be an MSAN, connects to the leaf switch (or service edge network node) and in a preferred scenario, the leaf switch hosts what is denoted as the service edge (SE). The service edge (or service edge functionality) terminates the layer 2 tunnels (stacked VLANs or MPLS tunnels or combinations thereof) from the subscribers' customer premises equipments. On its uplink the subscriber's tunnels end and only the IP addresses assigned to the specific subscriber are "seen" from the network; those may well be encapsulated in L2 tunnels throughout the switching fabric. In such a scenario, the service edge functionality might become a single point of failure, i.e. if the node hosting the service edge functionality or the running application or instance realizing the service edge functionality fails, the related customer or subscriber sessions fail as well. The present invention provides the possibility to realize redundancy at the service edge level where the subscriber tunnels (PPPoE or IPoE over any L2 technology) are terminated.

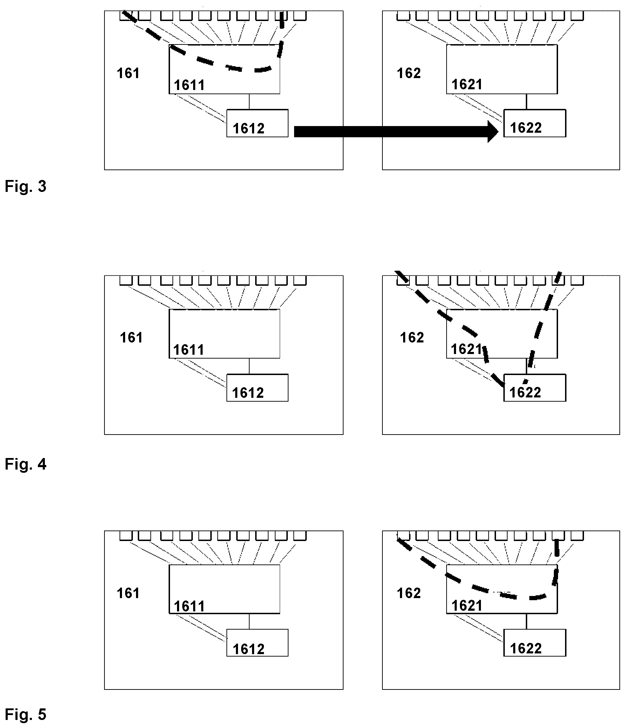

The service edge network nodes 161, 162, 163, 164 - and especially a first service edge network node 161 and a second service edge network node 162 - comprise, respectively, a forwarding hardware part or module, and a control hardware part or module. This is schematically represented in Figures 3, 4 and 5, which schematically illustrate, respectively, two service edge network nodes (the first service edge network node 161, and the second service edge network node 162) at different points in time in order to illustrate the inventive method.

For the first service edge network node 161, the corresponding forwarding hardware part or module is designated by reference sign 1611, and for the second service edge network node 162, the corresponding forwarding hardware part or module is designated by reference sign 1621). For the first service edge network node 161, the corresponding control hardware part or module is designated by reference sign 1612, and for the second service edge network node 162, the corresponding control hardware part or module is designated by reference sign 1622.

The service edge (or leaf) network nodes 161, 162, 163, 164 are hereinafter also called switches; a switch has a forwarding plane implemented on an ASIC; this corresponds to the forwarding hardware part or module. Any packet processing is (normally) done on this ASIC. The control plane - that resides on the compute board, i.e. the control hardware part or module, on the switch (or in other embodiments even outside on a separate compute device) - also contains the state and is the master. Any time there is a change in state necessary, the control plane on the compute board changes the state of the forwarding entries in the ASIC.

The at least one service edge instance or functionality, realized within or by the first service edge network node 161 and being operational at a point in time, corresponds to a state information, at or for that point in time, both in the forwarding hardware part or module 1611, and in the control hardware part or module 1612 of the first service edge network node 161. This means that the at least one service edge instance or functionality - e.g. a virtual machine instance or an instance of a software product running either directly on the first service edge network node 161, or running within a virtual machine running on the first service edge network node 161 - has or comprises or corresponds, at each point in time (or, strictly speaking, at least at every processor clock cycle or at every few processor clock cycles), to a configuration or state, especially a configuration or state of its forwarding hardware part or module 1611, wherein this configuration or state is potentially altered successively every processor clock cycle or every few processor clock cycles. This configuration or state is called the state information, and this state information, at least in general, differs at different points in time. According to the present invention and in order for an improved and/or more reliable operation of the central office point of delivery 110, the method comprises the following steps:
-- in a first step, the state information regarding the at least one service edge instance or functionality realized within or by the first service edge network node 161 is continuously synced at least to the control hardware part or module 1622 of the second service edge network node 162,
-- in a second step, subsequent to the first step and in case of failure of the first service edge network node 161, the second service edge network node 162 realizes the at least one service edge instance or functionality - previously realized within or by the first service edge network node 161 - by means of using the continuously synced state information. Hence, during the first step, the changes to the state information (applied by the corresponding service edge instance or functionality being operational and being operating, i.e. typically providing communication services to subscribers being served) are continuously synced to the second service edge network node 162.

Different embodiments regarding the syncing, within the first step, are conceivable:
The syncing, within the first step, might either comprise (as or regarding the source of the syncing)
   -- both a syncing of the state information corresponding to both the control hardware part or module 1612 and the forwarding hardware part or module 1611 (of the first service edge network node 161), or
   -- a syncing of the state information corresponding to the control hardware part or module 1612 (of the first service edge network node 161) only.
Furthermore, the syncing, within the first step, might either comprise (as or regarding the destination of the syncing)
   -- both a syncing of state information to both the control hardware part or module 1622 and the forwarding hardware part or module 1621 (of the second service edge network node 162), or
   -- a syncing of state information to the control hardware part or module 1622 (of the second service edge network node 162) only.

The syncing that is occurring during the first step is represented, in Figure 3, by means of a bold arrow pointing from the control hardware part or module 1612 of the first service edge network node 161 towards the control hardware part or module 1622 of the second service edge network node 162 (in order to indicate that, at least, a syncing of state information to the control hardware part or module 1622 of the second service edge network node 162 occurs; however, the other syncing alternatives, as described in this paragraph, are possible to be implemented as well). The dashed line shown in Figure 3 regarding the first service edge network node 161 represents the configuration (especially routing tables, etc.) of the control hardware part or module 1612 of the first service edge network node 161.

The second step is invoked in case of failure of the first service edge network node 161 (and/or in case of failure of the at least one service edge instance or functionality running on the first service edge network node 161) and is represented in both Figures 4 and 5. If such a failure happens, the synced state information (or the synced part of the state information of the first service edge network node 161) on the second service edge network node 162 (synced during the first step) is used to implement or to execute, on the second service edge network node, as soon as possible and to an extend as complete as possible (and progressively to an ever larger extend) the functionality of the first service edge network node 161 (or of the (failed) service edge instance or functionality previously running on the first service edge network node 161), i.e. the functionality of the first service edge network node 161 is taken over by (or handed over to) the second service edge network node 162.

According to a preferred embodiment of the present invention, this handover of the functionality of the first service edge network node 161 (by the second service edge network node 161) is realized by means of:
-- in a first sub-step of the second step (schematically represented in Figure 4), subsequent to the first step and in case of failure or scheduled downtime of the first service edge network node 161, the synced state information being present only in or at least primarily in the control hardware part or module 1622 of the second service edge network node 162, whereas the synced state information being at least not completely present in the forwarding hardware part or module 1621 of the second service edge network node 162, and the second service edge network node 162 partly realizing the at least one service edge instance or functionality previously realized within or by the first service edge network node 161, and
-- in a second sub-step of the second step (schematically represented in Figure 4), subsequent to the first sub-step of the second step, the method comprises the synced state information being present both in the control hardware part or module 1622, and in the forwarding hardware part or module 1621 of the second service edge network node 162, and the second service edge network node 162 fully realizing the at least one service edge instance or functionality previously realized within or by the first service edge network node 161.

A dashed line in Figure 4 regarding the second service edge network node 162 is intended to represent the intermediate situation of the first sup-step of the second step, during which the synced state information is not yet completely present in the second service edge network node 162, especially not completely present in the forwarding hardware part or module 1621 of the second service edge network node 162. During this intermediate situation, the most essential (or the most time sensitive (or latency sensitive)) traffic is preferably routed via the control hardware part or module 1622 of the second service edge network node 162. A dashed line in Figure 5 regarding the second service edge network node 162 and corresponding to the dashed line in Figure 3 (regarding the first service edge network node 161) is intended to represent the situation in the second sub-step of the second step according to which the second service edge network node 162 has completely taken over the fuctionality of the first service edge network node 161.

Hence, generally according to the present invention, the forwarding state (i.e. the state information) needs to be written on the leaf switch into the embedded ASIC (or other type o chipset like FPGA), i.e. the state information needs to be written in the forwarding hardware part or module 1621 of the second service edge network node 162, which is comparatively time -consuming. Thus and in contrast to conventionally known server-based virtual network functions, even in the existence of a redundant leaf switch pair per access node (i.e. a first and second service edge network node 161, 162 per access node), keeping their state in sync is comparatively hard to achieve. Additionally, in case that the backup device (i.e. the second service edge network node 162) shall cater as backup for n SE devices (i.e. not only for the first service edge network node 161, but also for a further service edge network node or for a plurality of further service edge network nodes), due to technology inherent limitations, the ASIC (i.e. the forwarding hardware part or module 1621 of the second service edge network node 162) can usually not carry more that the forwarding state of one service edge network node at the same time. The present invention provides a solution to realize - in real-time - a redundant session termination function (i.e. a service edge functionality) at minimum outage time with the ability for a n:1 redundancy (i.e. a redundant hardware target for an access node's service edge is available, either in the form of a (completely) redundant switch or network node, or in the form of a helper switch (which is the same scenario with the addition that it can be overbooked with regards to the amount on access nodes attached to it as it only needs to cater for the outage of a single service edge). As the service edge network nodes 161, 162, 163, 164 comprise both the forwarding hardware part or module and the control hardware part or module (typically a PC board that can act like a virtual network function), it is advantageously possible according to the present invention to realize the redundancy in a 2-step procedure (i.e. by means of the first sub-step and the second sub-step of the second step).

During the first step, the control plane between both SE (i.e. the first and second service edge network node 161, 162) sync on every state change, thus, both control planes (i.e. both control hardware parts or modules 1612, 1622) contain the same state. While the backup service edge's control plane (i.e. the second service edge node 162) is filled, the (complete) device is not activated; this corresponds, on the control plane level (i.e. regarding the control hardware parts or modules 1612, 1622) to a warm standby. The control plane on the backup service edge (i.e. the second service edge network node 162) is in addition pre-configuring the ASIC (i.e. the forwarding hardware part or module 1621) to route all packet traffic through additional lanes or data plane channels (schematically represented in Figures 3, 4 and 5 by means of inclined lines between the respective forwarding and control parts or modules) towards the PC board (i.e. the control hardware part or module 1622). Especially, there is a filter applied that only a reduced amount of subscriber traffic is sent that can be handled by the PC board (i.e. the control hardware part or module 1622) as the ASIC (i.e. the forwarding hardware part or module 1621) is by far more powerful in forwarding packets which is the sole purpose of its existence here. E.g., only voice traffic is routed via the additional lanes or data plane channels towards the PC board, and all other traffic is temporarily (i.e. related to the failure of the first service edge network node 161) dropped.

In case a failover event happens (i.e the first service edge network node 161 fails), the central control plane of the central office point of delivery (usually an software defined network controller) immediately adapts the path from the access nodes concerned to the backup service edge (i.e. the second service edge network node 162) as well as the uplinks of the backup service edge towards the spine switch layer. As a traffic subset (of, typically, high priority and/or low latency traffic) is being routed via the CPU (i.e. via the control hardware part or module 1622), the subscriber session's (e.g. PPPoE session, VoIP call) first vital functions are available without having had to touch the ASICs forwarding entries (i.e. the configuration of the forwarding hardware part or module 1621).

Now, the control plane on the backup SE (i.e. on the second service edge network node 162) iterates through the subscriber sessions it has cached (as part of syncing the state information) and - running through a priority mechanism that might e.g. prefer enterprise customers - moves the required forwarding state to the ASIC. According to a preferred embodiment of the present invention, sessions are grouped so that they can be easily classified at the ASIC's ingress packet parser. In case, e.g., that all enterprise customers use an out VLAN tag of value 33: In this case, all sessions for this tag will be written and, once all are moved, the packet parser gets instructed by one single command to stop forwarding the packets to the CPU (via the additional lanes or data plane channels) but now to forward via the ASIC. This needs to be done in parallel with the classification for packets coming from the spine switch (i.e. in reverse direction). Here, usually IP address range-based rules apply.

The implementation of the first sub-step of the second step is optional but it reduces the offline time dramatically (typically from minutes to less than a second).

Hence, this multi-stage procedure alleviates the issue with the relatively long time it takes to write state information into ASICs for data backup paths for a service edge network node. In case there is a fully redundant leaf switch setup available and those leaf switches' service edge functions are not overbooked, it might be conceivable to sync (during the first step) the state information not only to the control hardware part or module but also (completely) to the forwarding hardware part or module; hence the first sub-step of the second step is omitted. But even then, it might be preferably to realize the discussed multi-stage approach (i.e. realized the first sub-step of the second step) and have the local control plane of the backup device (i.e. the second service edge node 162) handle the communication with the ASIC on its own priority rules.

In a scenario with redundant leaf switches but lacking capability to cater for (i.e. syncing) all state information on the ASICs or all bandwidth (especially n:1 redundancy, with a helper switch), a backup mechanism may allow to move state information to the PC board and then have the PC board re-prioritize on the left over leaf switch, possibly cutting lower priority customers off the internet or a TV service while keeping them attached to VoIP and have higher priority customers enjoy full service using the freed resources.

## Claims

1. Method for an improved operation of a broadband access network (120) of a telecommunications network (100) and/or for an improved and/or more reliable operation of the broadband access network (120), the broadband access network (120) comprising a central office point of delivery (110) with a plurality of service edge network nodes (161, 162, 163), each one of the service edge network nodes (161, 162, 163) realizing at least one service edge instance or functionality, terminating a customer communication link towards a customer premises equipment or an access node (151),
wherein a first service edge network node (161) and a second service edge network node (162) comprises, respectively, a forwarding hardware part or module (1611, 1621), and a control hardware part or module (1612, 1622), wherein the at least one service edge instance or functionality, realized within or by the first service edge network node (161) and being operational at a point in time, corresponds to a state information, at or for that point in time, both in the forwarding hardware part or module (1611), and in the control hardware part or module (1612) of the first service edge network node (161),
wherein in order for an improved and/or more reliable operation of the central office point of delivery (110), the method comprises the following steps:
-- in a first step, the state information regarding the at least one service edge instance or functionality realized within or by the first service edge network node (161) is continuously synced at least to the control hardware part or module (1622) of the second service edge network node (162),
-- in a second step, subsequent to the first step and in case of failure of the first service edge network node (161), the second service edge network node (162) realizes the at least one service edge instance or functionality - previously realized within or by the first service edge network node (161) - by means of using the continuously synced state information, wherein during a first sub-step of the second step and in case of failure of the first service edge network node (161), prioritized user traffic is routed via the control hardware part or module (1622) of the second service edge network node (162).

2. Method according to claim 1, wherein in the first sub-step of the second step, subsequent to the first step and in case of failure or scheduled downtime of the first service edge network node (161), the method comprises the synced state information being present only in or at least primarily in the control hardware part or module (1622) of the second service edge network node (162), whereas the synced state information being at least not completely present in the forwarding hardware part or module (1621) of the second service edge network node (162), and the second service edge network node (162) partly realizing the at least one service edge instance or functionality previously realized within or by the first service edge network node (161),
wherein in a second sub-step of the second step, subsequent to the first sub-step of the second step, the method comprises the synced state information being present both in the control hardware part or module (1622), and in the forwarding hardware part or module (1621) of the second service edge network node (162), and the second service edge network node (162) fully realizing the at least one service edge instance or functionality previously realized within or by the first service edge network node (161).

3. Method according to one of the preceding claims, wherein continuously syncing, during the first step, the state information regarding the at least one service edge instance or functionality realized within or by the first service edge network node (161) involves syncing the state information as well as any changes currently occurring regarding this state information to the control hardware part or module (1622) of the second service edge network node (162), especially continuously maintaining a warm standby, within the second service edge network node (162), of the state of the at least one service edge instance or functionality, but preferably of a plurality of service edge entities or functionalities realized within or by the first service edge network node (161), and especially continuously maintaining a warm standby, within the second service edge network node (162), of the states of a plurality of service edge entities or functionalities realized within or by the first service edge network node (161) as well as at least one further service edge network node,
wherein especially the control hardware part or module (1612) of the first service edge network node (161) and the control hardware part or module (1622) of the second service edge network node (162) realize, respectively, a control plane regarding their respective first and second service edge network nodes (161, 162), and wherein especially the forwarding hardware part or module (1621) of the second service edge network node (162) is inactivated during the first step or during the warm standby,
wherein especially continuously syncing, during the first step, the state information regarding the at least one service edge instance or functionality realized within or by the first service edge network node (161) involves syncing the state information, as well as any changes,
-- either using an in-band communication through one of the plurality of spine network nodes (171, 172, 173),
-- or a management network or control plane communication within the central office point of delivery (110), especially a bottom-of-rack switch.

4. Method according to one of the preceding claims, wherein during the first sub-step of the second step, subsequent to the first step and in case of failure of the first service edge network node (161), the method comprises the synced state information being present only in or at least primarily in the control hardware part or module (1622) of the second service edge network node (162), and the synced state information being at least not completely present in the forwarding hardware part or module (1621) of the second service edge network node (162), and the second service edge network node (162) only partly realizing the at least one service edge instance or functionality previously realized within or by the first service edge network node (161),
wherein especially the second service edge network node (162) realizes the at least one service edge instance or functionality - previously realized within or by the first service edge network node (161) -with regard to the prioritized user traffic only, especially traffic within specific traffic classes, especially voice over IP traffic, and/or traffic regarding specific classes of customers.

5. Method according to one of the preceding claims, wherein the prioritized user traffic is routed via the control hardware part or module (1622) of the second service edge network node (162) by means of using data plane channels between the forwarding hardware part or module (1621) and the control hardware part or module (1622) of the second service edge network node (162),
wherein especially the forwarding hardware part or module (1621) of the second service edge network node (162) is preconfigured, especially prior to the first sub-step of the second step, such that all data plane traffic is routed through the data plane channels between the forwarding hardware part or module (1621) and the control hardware part or module (1622) of the second service edge network node (162).

6. Method according to one of the preceding claims, wherein during the first sub-step of the second step, subsequent to the first step and in case of failure of the first service edge network node (161), the method comprises progressively configuring the forwarding hardware part or module (1621) of the second service edge network node (162) - especially by means of a control channel between the control hardware part or module (1622) and the forwarding hardware part or module (1621) of the second service edge network node (162) - in order to realize the at least one service edge instance or functionality, previously realized within or by the first service edge network node (161), also regarding the lower priority user plane traffic, and thereby progressively entering or realizing the second sub-step of the second step by means of the synced state information being present both in the control hardware part or module (1622), and in the forwarding hardware part or module (1621) of the second service edge network node (162).

7. Method according to one of the preceding claims, wherein, in the second step, the synced state information is at first present only in or at least primarily only in the control hardware part or module (1622) of the second service edge network node (162) - and the synced state information being not at all, or, at least not completely, present in the forwarding hardware part or module (1621) of the second service edge network node (162) - , and the second service edge network node (162) progressively realizing the at least one service edge instance or functionality, previously realized within or by the first service edge network node (161), by means of progressively configuring the forwarding hardware part or module (1621) of the second service edge network node (162) - especially by means of a control channel between the control hardware part or module (1622) and the forwarding hardware part or module (1621) of the second service edge network node (162).

8. Method according to one of the preceding claims, wherein the central office point of delivery (110) comprises a switching fabric (115), the switching fabric (115) comprising a plurality of spine network nodes (171, 172, 173) and a plurality of leaf network nodes, wherein the leaf network nodes correspond to or host or co-host the service edge network nodes (161, 162, 163),
wherein especially the central office point of delivery (110) and/or the broadband access network (120) comprise(s) a plurality of line termination nodes (151), wherein each one of the plurality of line termination nodes (151) is connected to at least two service edge network nodes of the plurality of service edge network nodes (161, 162, 163), wherein especially each one of the plurality of service edge network nodes (161, 162, 163) is connected to at least two spine network nodes of the plurality of spine network nodes (171, 172, 173).

9. Broadband access network (120) or telecommunications network (100) for an improved operation of a broadband access network (120) of a telecommunications network (100) and/or for an improved and/or more reliable operation of the broadband access network (120), the broadband access network (120) comprising a central office point of delivery (110) with a plurality of service edge network nodes (161, 162, 163), each one of the service edge network nodes (161, 162, 163) realizing at least one service edge instance or functionality, terminating a customer communication link towards a customer premises equipment or an access node (151),
wherein a first service edge network node (161) and a second service edge network node (162) comprises, respectively, a forwarding hardware part or module (1611, 1621), and a control hardware part or module (1612, 1622), wherein the at least one service edge instance or functionality, realized within or by the first service edge network node (161) and being operational at a point in time, corresponds to a state information, at or for that point in time, both in the forwarding hardware part or module (1611), and in the control hardware part or module (1612) of the first service edge network node (161),
wherein in order for an improved and/or more reliable operation of the central office point of delivery (110), the broadband access network (120) or the telecommunications network (100) is configured such that:
-- the state information regarding the at least one service edge instance or functionality realized within or by the first service edge network node (161) is continuously synced at least to the control hardware part or module (1622) of the second service edge network node (162),
-- in case of failure of the first service edge network node (161), the second service edge network node (162) realizes the at least one service edge instance or functionality - previously realized within or by the first service edge network node (161) - by means of using the continuously synced state information, wherein in case of failure of the first service edge network node (161), prioritized user traffic is routed via the control hardware part or module (1622) of the second service edge network node (162).

10. Service edge network node (161, 162, 163) for an improved operation of a broadband access network (120) of a telecommunications network (100) and/or for an improved and/or more reliable operation of the broadband access network (120) or the telecommunications network (100) according to claim 9.

11. System for an improved operation of a broadband access network (120) of a telecommunications network (100) and/or for an improved and/or more reliable operation of the broadband access network (120), the broadband access network (120) comprising a central office point of delivery (110) with a plurality of service edge network nodes (161, 162, 163), each one of the service edge network nodes (161, 162, 163) realizing at least one service edge instance or functionality, terminating a customer communication link towards a customer premises equipment or an access node (151),
wherein a first service edge network node (161) and a second service edge network node (162) comprises, respectively, a forwarding hardware part or module (1611, 1621), and a control hardware part or module (1612, 1622), wherein the at least one service edge instance or functionality, realized within or by the first service edge network node (161) and being operational at a point in time, corresponds to a state information, at or for that point in time, both in the forwarding hardware part or module (1611), and in the control hardware part or module (1612) of the first service edge network node (161),
wherein in order for an improved and/or more reliable operation of the central office point of delivery (110), the system is configured such that:
-- the state information regarding the at least one service edge instance or functionality realized within or by the first service edge network node (161) is continuously synced at least to the control hardware part or module (1622) of the second service edge network node (162),
-- in case of failure of the first service edge network node (161), the second service edge network node (162) realizes the at least one service edge instance or functionality - previously realized within or by the first service edge network node (161) - by means of using the continuously synced state information, wherein in case of failure of the first service edge network node (161), prioritized user traffic is routed via the control hardware part or module (1622) of the second service edge network node (162).

12. Program comprising a computer readable program code which, when executed on a computer and/or on a service edge network node (161, 162, 163) and/or on a network node of a switching fabric (115), or in part on the service edge network node (161, 162, 163) and in part on a network node of a switching fabric (115), causes the computer and/or the service edge network node (161, 162, 163) and/or the network node of the switching fabric (115) to perform a method according one of claims 1 to 8.

13. Computer-readable medium comprising instructions which when executed on a computer and/or on a service edge network node (161, 162, 163) and/or on a network node of a switching fabric (115), or in part on the service edge network node (161, 162, 163) and in part on a network node of a switching fabric (115), causes the computer and/or the service edge network node (161, 162, 163) and/or the network node of the switching fabric (115) to perform a method according one of claims 1 to 8.

## Patentansprüche

1. Verfahren für einen verbesserten Betrieb eines Breitbandzugangsnetzes (120) eines Telekommunikationsnetzes (100) und/oder für einen verbesserten und/oder zuverlässigeren Betrieb des Breitbandzugangsnetzes (120), wobei das Breitbandzugangsnetz (120) einen Vermittlungsamt-Übergabepunkt (110) mit mehreren Service-Edge-Netzknoten (161, 162, 163) umfasst, wobei jeder der Service-Edge-Netzknoten (161, 162, 163) mindestens eine Service-Edge-Instanz oder -Funktionalität realisiert, die einen Kundenkommunikationslink zu einem Teilnehmer-Endgerät oder einem Zugangsknoten (151) terminiert,
wobei ein erster Service-Edge-Netzknoten (161) und ein zweiter Service-Edge-Netzknoten (162) jeweils einen Weiterleitungs-Hardwareteil oder ein Weiterleitungs-Hardwaremodul (1611, 1621) und einen Steuerungs-Hardwareteil oder ein Steuerungs-Hardwaremodul (1612, 1622) umfasst,
wobei die mindestens eine Service-Edge-Instanz oder -Funktionalität, die in dem oder durch den ersten Service-Edge-Netzknoten (161) realisiert wird und an einem Zeitpunkt in Betrieb ist, einer Zustandsinformation an diesem oder für diesen Zeitpunkt sowohl in dem Weiterleitungs-Hardwareteil oder Weiterleitungs-Hardwaremodul (1611) als auch in dem Steuerungs-Hardwareteil oder Steuerungs-Hardwaremodul (1612) des ersten Service-Edge-Netzknotens (161) entspricht,
wobei das Verfahren zum Zweck eines verbesserten und/oder zuverlässigeren Betriebes des Vermittlungsamt-Übergabepunktes (110) die folgenden Schritte umfasst:
- in einem ersten Schritt werden die Zustandsinformationen bezüglich der mindestens einen Service-Edge-Instanz oder -Funktionalität, die in dem oder durch den ersten Service-Edge-Netzknoten (161) realisiert wird, kontinuierlich mindestens mit dem Steuerungs-Hardwareteil oder Steuerungs-Hardwaremodul (1622) des zweiten Service-Edge-Netzknotens (162) synchronisiert,
- in einem zweiten Schritt, im Anschluss an den ersten Schritt und im Fall eines Ausfalls des ersten Service-Edge-Netzknotens (161), realisiert der zweite Service-Edge-Netzknoten (162) die mindestens eine Service-Edge-Instanz oder -Funktionalität, die zuvor in dem oder durch den ersten Service-Edge-Netzknoten (161) realisiert wurde, unter Verwendung der kontinuierlich synchronisierten Zustandsinformationen, wobei während eines ersten Teilschrittes des zweiten Schrittes und im Fall eines Ausfalls des ersten Service-Edge-Netzknotens (161) ein priorisierter Benutzerverkehr über das Steuerungs-Hardwareteil oder Steuerungs-Hardwaremodul (1622) des zweiten Service-Edge-Netzknotens (162) geroutet wird.

2. Verfahren nach Anspruch 1, wobei das Verfahren in dem ersten Teilschritt des zweiten Schrittes, im Anschluss an den ersten Schritt und im Fall eines Ausfalls oder einer geplanten Abschaltzeit des ersten Service-Edge-Netzknotens (161), umfasst, dass die synchronisierten Zustandsinformationen ausschließlich oder mindestens hauptsächlich in dem Steuerungs-Hardwareteil oder Steuerungs-Hardwaremodul (1622) des zweiten Service-Edge-Netzknotens (162) vorhanden sind, während die synchronisierten Zustandsinformationen mindestens nicht vollständig in dem Weiterleitungs-Hardwareteil oder Weiterleitungs-Hardwaremodul (1621) des zweiten Service-Edge-Netzknotens (162) vorhanden sind, und der zweite Service-Edge-Netzknoten (162) teilweise die mindestens eine Service-Edge-Instanz oder -Funktionalität realisiert, die zuvor in dem oder durch den ersten Service-Edge-Netzknoten (161) realisiert wurde,
wobei das Verfahren in einem zweiten Teilschritt des zweiten Schrittes, im Anschluss an den ersten Teilschritt des zweiten Schrittes, umfasst, dass die synchronisierten Zustandsinformationen sowohl in dem Steuerungs-Hardwareteil oder Steuerungs-Hardwaremodul (1622) als auch in dem Weiterleitungs-Hardwareteil oder Weiterleitungs-Hardwaremodul (1621) des zweiten Service-Edge-Netzknotens (162) vorhanden ist und der zweite Service-Edge-Netzknoten (162) die mindestens eine Service-Edge-Instanz oder -Funktionalität, die zuvor in dem oder durch den ersten Service-Edge-Netzknoten (161) realisiert wurde, vollständig realisiert.

3. Verfahren nach einem der vorangehenden Ansprüche, wobei das kontinuierliche Synchronisieren, während des ersten Schrittes, der Zustandsinformationen bezüglich der mindestens einen Service-Edge-Instanz oder -Funktionalität, die in dem oder durch den ersten Service-Edge-Netzknoten (161) realisiert wird, Folgendes umfasst: Synchronisieren der Zustandsinformationen sowie jeglicher momentan auftretenden Änderungen bezüglich dieser Zustandsinformationen mit dem Steuerungs-Hardwareteil oder Steuerungs-Hardwaremodul (1622) des zweiten Service-Edge-Netzknotens (162), insbesondere das kontinuierliche Aufrechterhalten eines warmen Standby, in dem zweiten Service-Edge-Netzknoten (162), des Zustands der mindestens einen Service-Edge-Instanz oder -Funktionalität, bevorzugt jedoch von mehreren Service-Edge-Entitäten oder -Funktionalitäten, die in dem oder durch den ersten Service-Edge-Netzwerkknoten (161) realisiert werden, und insbesondere das kontinuierliche Aufrechterhalten eines warmen Standby, in dem oder durch den zweiten Service-Edge-Netzwerkknotens (162), der Zustände von mehreren Service-Edge-Entitäten oder -Funktionalitäten, die in dem oder durch den ersten Service-Edge-Netzwerkknoten (161) realisiert werden, sowie mindestens eines weiteren Service-Edge-Netzwerkknotens,
wobei insbesondere der Steuerungs-Hardwareteil oder das Steuerungs-Hardwaremodul (1612) des ersten Service-Edge-Netzknotens (161) und der Steuerungs-Hardwareteil oder das Steuerungs-Hardwaremodul (1622) des zweiten Service-Edge-Netzknotens (162) jeweils eine Steuerungsebene bezüglich ihres jeweiligen ersten und zweiten Service-Edge-Netzknotens (161 162) realisieren, und wobei insbesondere der Weiterleitungs-Hardwareteil oder das Weiterleitungs-Hardwaremodul (1621) des zweiten Service-Edge-Netzknotens (162) während des ersten Schrittes oder während des warmen Standby deaktiviert wird,
wobei insbesondere das kontinuierliche Synchronisieren, während des ersten Schrittes, der Zustandsinformationen bezüglich der mindestens einen Service-Edge-Instanz oder Funktionalität, die in dem oder durch den ersten Service-Edge-Netzknoten (161) realisiert wird, das Synchronisieren der Zustandsinformationen sowie jeglicher Änderungen umfasst,
- entweder unter Verwendung einer In-Band-Kommunikation über einen der mehreren Spine-Netzknoten (171, 172, 173)
- oder eines Managementnetzes oder einer Steuerungsebenenkommunikation innerhalb des Vermittlungsamt-Übergabepunktes (110), insbesondere eines Bottom-of-Rack-Switch.

4. Verfahren nach einem der vorangehenden Ansprüche, wobei das Verfahren während des ersten Teilschrittes des zweiten Schrittes, im Anschluss an den ersten Schritt und im Fall eines Ausfalls des ersten Service-Edge-Netzknotens (161), umfasst, dass die synchronisierten Zustandsinformationen ausschließlich oder mindestens hauptsächlich in dem Steuerungs-Hardwareteil oder Steuerungs-Hardwaremodul (1622) des zweiten Service-Edge-Netzknotens (162) vorhanden sind, und die synchronisierten Zustandsinformationen mindestens nicht vollständig in dem Weiterleitungs-Hardwareteil oder Weiterleitungs-Hardwaremodul (1621) des zweiten Service-Edge-Netzknotens (162) vorhanden sind, und der zweite Service-Edge-Netzknoten (162) nur teilweise die mindestens eine Service-Edge-Instanz oder -Funktionalität realisiert, die zuvor in dem oder durch den ersten Service-Edge-Netzknoten (161) realisiert wurde,
wobei insbesondere der zweite Service-Edge-Netzknoten (162) die mindestens eine Service-Edge-Instanz oder -Funktionalität, die zuvor in dem oder durch den ersten Service-Edge-Netzknoten (161) realisiert wurde, nur im Hinblick auf den priorisierten Benutzerverkehr, insbesondere Verkehr innerhalb spezifischer Verkehrsklassen, insbesondere Voice-over-IP-Verkehr, und/oder Verkehr bezüglich spezifischer Kundenklassen, realisiert.

5. Verfahren nach einem der vorangehenden Ansprüche, wobei der priorisierte Benutzerverkehr über den Steuerungs-Hardwareteil oder das Steuerungs-Hardwaremodul (1622) des zweiten Service-Edge-Netzknotens (162) unter Verwendung von Datenebenenkanälen zwischen dem Weiterleitungs-Hardwareteil oder Weiterleitungs-Hardwaremodul (1621) und dem Steuerungs-Hardwareteil oder Steuerungs-Hardwaremodul (1622) des zweiten Service-Edge-Netzknotens (162) geroutet wird,
wobei insbesondere der Weiterleitungs-Hardwareteil oder das Weiterleitungs-Hardwaremodul (1621) des zweiten Service-Edge-Netzknotens (162) vorkonfiguriert wird, insbesondere vor dem ersten Teilschritt des zweiten Schrittes, dergestalt, dass der gesamte Datenebenenverkehr durch die Datenebenenkanäle zwischen dem Weiterleitungs-Hardwareteil oder Weiterleitungs-Hardwaremodul (1621) und dem Steuerungs-Hardwareteil oder Steuerungs-Hardwaremodul (1622) des zweiten Service-Edge-Netzknotens (162) geroutet wird.

6. Verfahren nach einem der vorangehenden Ansprüche, wobei das Verfahren während des ersten Teilschrittes des zweiten Schrittes, im Anschluss an den ersten Schritt und im Fall eines Ausfalls des ersten Service-Edge-Netzknotens (161), das allmähliche Konfigurieren des Weiterleitungs-Hardwareteils oder Weiterleitungs-Hardwaremoduls (1621) des zweiten Service-Edge-Netzknotens (162), insbesondere mittels eines Steuerungskanals zwischen dem Steuerungs-Hardwareteil oder Steuerungs-Hardwaremodul (1622) und dem Weiterleitungs-Hardwareteil oder Weiterleitungs-Hardwaremodul (1621) des zweiten Service-Edge-Netzknotens (162), umfasst, um die mindestens eine Service-Edge-Instanz oder -Funktionalität zu realisieren, um die mindestens eine Service-Edge-Instanz oder -Funktionalität zu realisieren, die zuvor in dem oder durch den ersten Service-Edge-Netzknotens (161) realisiert wurde, auch in Bezug auf den Benutzerebenenverkehr mit niedrigerer Priorität, und um dadurch allmählich in den zweiten Teilschritt des zweiten Schrittes einzutreten oder den den zweiten Teilschritt des zweiten Schrittes zu realisieren, indem die synchronisierten Zustandsinformationen sowohl in dem Steuerungs-Hardwareteil oder Steuerungs-Hardwaremodul (1622) als auch in dem Weiterleitungs-Hardwareteil oder Weiterleitungs-Hardwaremodul (1621) des zweiten Service-Edge-Netzknotens (162) vorhanden sind.

7. Verfahren nach einem der vorangehenden Ansprüche, wobei in dem zweiten Schritt die synchronisierten Zustandsinformationen zuerst ausschließlich oder mindestens überwiegend ausschließlich in dem Steuerungs-Hardwareteil oder Steuerungs-Hardwaremodul (1622) des zweiten Service-Edge-Netzknotens (162) vorhanden ist und die synchronisierten Zustandsinformationen überhaupt nicht oder mindestens nicht vollständig in dem Weiterleitungs-Hardwareteil oder Weiterleitungs-Hardwaremodul (1621) des zweiten Service-Edge-Netzknotens (162) vorhanden sind, und der zweite Service-Edge-Netzknoten (162) allmählich die mindestens eine Service-Edge-Instanz oder -Funktionalität, die zuvor in dem oder durch den ersten Service-Edge-Netzknoten (161) realisiert wurde, mittels allmählicher Konfiguration des Weiterleitungs-Hardwareteils oder Weiterleitungs-Hardwaremoduls (1621) des zweiten Service-Edge-Netzknotens (162), insbesondere mittels eines Steuerungskanals zwischen dem Steuerungs-Hardwareteil oder Steuerungs-Hardwaremodul (1622) und dem Weiterleitungs-Hardwareteil oder Weiterleitungs-Hardwaremodul (1621) des zweiten Service-Edge-Netzknotens (162), realisiert.

8. Verfahren nach einem der vorangehenden Ansprüche, wobei der Vermittlungsamt-Übergabepunkt (110) ein Switching Fabric (115) umfasst, wobei das Switching Fabric (115) mehrere Spine-Netzknoten (171, 172, 173) und mehrere Leaf-Netzknoten umfasst, wobei die Leaf-Netzknoten den Service-Edge-Netzknoten (161, 162, 163) entsprechen oder diese hosten oder ko-hosten,
wobei insbesondere der Vermittlungsamt-Übergabepunkt (110) und/oder das Breitbandzugangsnetz (120) mehrere Leitungsterminierungsknoten (151) umfassen, wobei jeder der mehreren Leitungsterminierungsknoten (151) mit mindestens zwei Service-Edge-Netzknoten der mehreren Service-Edge-Netzknoten (161, 162, 163) verbunden ist, wobei insbesondere jeder der mehreren Service-Edge-Netzknoten (161, 162, 163) mit mindestens zwei Spine-Netzknoten der mehreren Spine-Netzknoten (171, 172, 173) verbunden ist.

9. Breitbandzugangsnetz (120) oder Telekommunikationsnetz (100) für einen verbesserten Betrieb eines Breitbandzugangsnetzes (120) eines Telekommunikationsnetzes (100) und/oder für einen verbesserten und/oder zuverlässigeren Betrieb des Breitbandzugangsnetzes (120), wobei das Breitbandzugangsnetz (120) einen Vermittlungsamt-Übergabepunkt (110) mit mehreren Service-Edge-Netzknoten (161, 162, 163) umfasst, wobei jeder der Service-Edge-Netzknoten (161, 162, 163) mindestens eine Service-Edge-Instanz oder -Funktionalität realisiert, die einen Kundenkommunikationslink zu einem Teilnehmer-Endgerät oder einem Zugangsknoten (151) terminiert,
wobei ein erster Service-Edge-Netzknoten (161) und ein zweiter Service-Edge-Netzknoten (162) jeweils einen Weiterleitungs-Hardwareteil oder ein Weiterleitungs-Hardwaremodul (1611, 1621) und einen Steuerungs-Hardwareteil oder ein Steuerungs-Hardwaremodul (1612, 1622) umfasst,
wobei die mindestens eine Service-Edge-Instanz oder -Funktionalität, die in dem oder durch den ersten Service-Edge-Netzknoten (161) realisiert wird und an einem Zeitpunkt in Betrieb ist, einer Zustandsinformation an diesem oder für diesen Zeitpunkt sowohl in dem Weiterleitungs-Hardwareteil oder Weiterleitungs-Hardwaremodul (1611) als auch in dem Steuerungs-Hardwareteil oder Steuerungs-Hardwaremodul (1612) des ersten Service-Edge-Netzknotens (161) entspricht,
wobei das Breitbandzugangsnetz (120) oder das Telekommunikationsnetz (100) zum Zweck eines verbesserten und/oder zuverlässigeren Betriebes des Vermittlungsamt-Übergabepunktes (110) so konfiguriert ist, dass:
- die Zustandsinformationen bezüglich der mindestens einen Service-Edge-Instanz oder -Funktionalität, die in dem oder durch den ersten Service-Edge-Netzknoten (161) realisiert wird, kontinuierlich mindestens mit dem Steuerungs-Hardwareteil oder Steuerungs-Hardwaremodul (1622) des zweiten Service-Edge-Netzknotens (162) synchronisiert werden,
- im Fall eines Ausfalls des ersten Service-Edge-Netzknotens (161) der zweite Service-Edge-Netzknoten (162) die mindestens eine Service-Edge-Instanz oder -Funktionalität, die zuvor in dem oder durch den ersten Service-Edge-Netzknoten (161) realisiert wurde, unter Verwendung der kontinuierlich synchronisierten Zustandsinformationen realisiert,
wobei im Fall eines Ausfalls des ersten Service-Edge-Netzknotens (161) der priorisierte Benutzerverkehr über das Steuerungs-Hardwareteil oder Steuerungs-Hardwaremodul (1622) des zweiten Service-Edge-Netzknotens (162) geroutet wird.

10. Service-Edge-Netzknoten (161, 162, 163) für einen verbesserten Betrieb eines Breitbandzugangsnetzes (120) eines Telekommunikationsnetzes (100) und/oder für einen verbesserten und/oder zuverlässigeren Betrieb des Breitbandzugangsnetzes (120) oder des Telekommunikationsnetzes (100) nach Anspruch 9.

11. System für einen verbesserten Betrieb eines Breitbandzugangsnetzes (120) eines Telekommunikationsnetzes (100) und/oder für einen verbesserten und/oder zuverlässigeren Betrieb des Breitbandzugangsnetzes (120), wobei das Breitbandzugangsnetz (120) einen Vermittlungsamt-Übergabepunkt (110) mit mehreren Service-Edge-Netzknoten (161, 162, 163) umfasst, wobei jeder der Service-Edge-Netzknoten (161, 162, 163) mindestens eine Service-Edge-Instanz oder -Funktionalität realisiert, die einen Kundenkommunikationslink zu einem Teilnehmer-Endgerät oder einem Zugangsknoten (151) terminiert,
wobei ein erster Service-Edge-Netzknoten (161) und ein zweiter Service-Edge-Netzknoten (162) jeweils einen Weiterleitungs-Hardwareteil oder ein Weiterleitungs-Hardwaremodul (1611, 1621) und einen Steuerungs-Hardwareteil oder ein Steuerungs-Hardwaremodul (1612, 1622) umfasst,
wobei die mindestens eine Service-Edge-Instanz oder -Funktionalität, die in dem oder durch den ersten Service-Edge-Netzknoten (161) realisiert wird und an einem Zeitpunkt in Betrieb ist, einer Zustandsinformation an diesem oder für diesen Zeitpunkt sowohl in dem Weiterleitungs-Hardwareteil oder Weiterleitungs-Hardwaremodul (1611) als auch in dem Steuerungs-Hardwareteil oder Steuerungs-Hardwaremodul (1612) des ersten Service-Edge-Netzknotens (161) entspricht,
wobei das System zum Zweck eines verbesserten und/oder zuverlässigeren Betriebes des Vermittlungsamt-Übergabepunktes (110) so konfiguriert ist, dass:
- die Zustandsinformationen bezüglich der mindestens einen Service-Edge-Instanz oder -Funktionalität, die in dem oder durch den ersten Service-Edge-Netzknoten (161) realisiert wird, kontinuierlich mindestens mit dem Steuerungs-Hardwareteil oder Steuerungs-Hardwaremodul (1622) des zweiten Service-Edge-Netzknotens (162) synchronisiert werden,
- im Fall eines Ausfalls des ersten Service-Edge-Netzknotens (161) der zweite Service-Edge-Netzknoten (162) die mindestens eine Service-Edge-Instanz oder -Funktionalität, die zuvor in dem oder durch den ersten Service-Edge-Netzknoten (161) realisiert wurde, unter Verwendung der kontinuierlich synchronisierten Zustandsinformationen realisiert, wobei im Fall eines Ausfalls des ersten Service-Edge-Netzknotens (161) ein priorisierter Benutzerverkehr über das Steuerungs-Hardwareteil oder Steuerungs-Hardwaremodul (1622) des zweiten Service-Edge-Netzknotens (162) geroutet wird.

12. Programm, umfassend einen computerlesbaren Programmcode, der, wenn er auf einem Computer und/oder in einem Service-Edge-Netzknoten (161, 162, 163) und/oder in einem Netzknoten eines Switching Fabric (115) oder teilweise in dem Service-Edge-Netzknoten (161, 162, 163) und teilweise in einem Netzknoten eines Switching Fabric (115) ausgeführt wird, den Computer und/oder den Service-Edge-Netzknoten (161, 162, 163) und/oder den Netzknoten des Switching Fabric (115) veranlasst, ein Verfahren nach einem der Ansprüche 1 bis 8 durchzuführen.

13. Computerlesbares Medium, umfassend Instruktionen, die, wenn sie auf einem Computer und/oder in einem Service-Edge-Netzknoten (161, 162, 163) und/oder in einem Netzknoten eines Switching Fabric (115) oder teilweise in dem Service-Edge-Netzknoten (161, 162, 163) und teilweise in einem Netzknoten eines Switching Fabric (115) ausgeführt werden, den Computer und/oder den Service-Edge-Netzknoten (161, 162, 163) und/oder den Netzknoten des Switching Fabric (115) veranlassen, ein Verfahren nach einem der Ansprüche 1 bis 8 durchzuführen.

## Revendications

1. Procédé pour un fonctionnement amélioré d'un réseau d'accès à large bande (120) d'un réseau de télécommunications (100) et/ou pour un fonctionnement amélioré et/ou plus fiable du réseau d'accès à large bande (120), le réseau d'accès à large bande (120) comprenant un point de distribution de centre de commutation (110) avec une pluralité de noeuds de réseau de bord de service (161, 162, 163), chacun des noeuds de réseau de bord de service (161, 162, 163) réalisant au moins une instance ou une fonctionnalité de bord de service, terminant une liaison de communication client vers un équipement des locaux d'abonné ou un noeud d'accès (151),
dans lequel un premier noeud de réseau de bord de service (161) et un second noeud de réseau de bord de service (162) comprennent respectivement une partie ou un module matériel d'acheminement (1611, 1621) et une partie ou un module matériel de commande (1612, 1622), dans lequel la au moins une instance ou fonctionnalité de bord de service, réalisée dans ou par le premier noeud de réseau de bord de service (161) et opérationnelle à un moment donné, correspond à des informations d'état, à ce moment-là ou pour ce moment-là, à la fois dans la partie ou le module matériel d'acheminement (1611), et dans la partie ou le module matériel de commande (1612) du premier noeud de réseau de bord de service (161),
dans lequel, pour un fonctionnement amélioré et/ou plus fiable du point de distribution de centre de commutation (110), le procédé comprend les étapes suivantes :
- dans une première étape, les informations d'état concernant la au moins une instance ou fonctionnalité de bord de service réalisée dans ou par le premier noeud de réseau de bord de service (161) sont synchronisées en continu au moins avec la partie ou le module matériel de commande (1622) du second noeud de réseau de bord de service (162),
- dans une seconde étape, après la première étape et en cas de défaillance du premier noeud de réseau de bord de service (161), le second noeud de réseau de bord de service (162) réalise l'au moins une instance ou fonctionnalité de bord de service - précédemment réalisée dans ou par le premier noeud de réseau de bord de service (161) - au moyen de l'utilisation des informations d'état synchronisées en continu, dans lequel, au cours d'une première sous-étape de la seconde étape et en cas de défaillance du premier noeud de réseau de bord de service (161), le trafic utilisateur priorisé est acheminé par l'intermédiaire de la partie ou du module matériel de commande (1622) du second noeud de réseau de bord de service (162).

2. Procédé selon la revendication 1, dans lequel, dans la première sous-étape de la seconde étape, après la première étape et en cas de défaillance ou d'arrêt programmé du premier noeud de réseau de bord de service (161), le procédé comprend le fait que les informations d'état synchronisées sont présentes uniquement ou au moins principalement dans la partie ou le module matériel de commande (1622) du second noeud de réseau de bord de service (162), tandis que les informations d'état synchronisées ne sont au moins pas entièrement présentes dans la partie ou le module matériel d'acheminement (1621) du second noeud de réseau de bord de service (162), et le second noeud de réseau de bord de service (162) réalise en partie la au moins une instance ou fonctionnalité de bord de service précédemment réalisée dans ou par le premier noeud de réseau de bord de service (161),
dans lequel, dans une seconde sous-étape de la seconde étape, après la première sous-étape de la seconde étape, le procédé comprend le fait que les informations d'état synchronisées sont présentes à la fois dans la partie ou le module matériel de commande (1622) et dans la partie ou le module matériel d'acheminement (1621) du second noeud de réseau de bord de service (162), et le second noeud de réseau de bord de service (162) réalise entièrement la au moins une instance ou fonctionnalité de bord de service précédemment réalisée dans ou par le premier noeud de réseau de bord de service (161).

3. Procédé selon l'une des revendications précédentes, dans lequel la synchronisation continue, au cours de la première étape, des informations d'état concernant la au moins une instance ou fonctionnalité de bord de service réalisée dans ou par le premier noeud de réseau de bord de service (161) implique la synchronisation des informations d'état ainsi que de tout changement en cours concernant ces informations d'état avec la partie ou le module matériel de commande (1622) du second noeud de réseau de bord de service (162), en particulier, le maintien continu d'un secours semi-automatique, dans le second noeud de réseau de bord de service (162), de l'état de la au moins une instance ou fonctionnalité de bord de service, mais de préférence d'une pluralité d'entités ou fonctionnalités de bord de service réalisées dans ou par le premier noeud de réseau de bord de service (161), et en particulier le maintien continu d'un secours semi-automatique, dans le second noeud de réseau de bord de service (162), des états d'une pluralité d'entités ou fonctionnalités de bord de service réalisées dans ou par le premier noeud de réseau de bord de service (161), ainsi que d'au moins un autre noeud de réseau de bord de service, dans lequel la partie ou le module matériel de commande (1612) du premier noeud de réseau de bord de service (161) et la partie ou le module matériel de commande (1622) du second noeud de réseau de bord de service (162) réalisent, respectivement, un plan de commande concernant leurs premier et second noeuds de réseau de bord de service respectifs (161, 162), et dans lequel la partie ou le module matériel d'acheminement (1621) du second noeud de réseau de bord de service (162) est inactivé pendant la première étape ou pendant le secours semi-automatique,
dans lequel la synchronisation continue, au cours de la première étape, des informations d'état concernant la au moins une instance ou fonctionnalité de bord de service réalisée dans ou par le premier noeud de réseau de bord de service (161) implique la synchronisation des informations d'état, ainsi que de tout changement,
- en utilisant soit une communication intrabande par l'intermédiaire de l'un de la pluralité de noeuds de réseau troncs (171, 172, 173),
- soit un réseau de gestion ou une communication de plan de commande au sein du point de distribution de centre de commutation (110), en particulier un commutateur de panier inférieur.

4. Procédé selon l'une des revendications précédentes, dans lequel, au cours de la première sous-étape de la seconde étape, après la première étape et en cas de défaillance du premier noeud de réseau de bord de service (161), le procédé le fait que les informations d'état synchronisées sont présentes uniquement ou au moins principalement dans la partie ou le module matériel de commande (1622) du second noeud de réseau de bord de service (162), et les informations d'état synchronisées ne sont au moins pas entièrement présentes dans la partie ou le module matériel d'acheminement (1621) du second noeud de réseau de bord de service (162), et le second noeud de réseau de bord de service (162) ne réalise que partiellement la au moins une instance ou fonctionnalité de bord de service précédemment réalisée dans ou par le premier noeud de réseau de bord de service (161),
dans lequel le second noeud de réseau de bord de service (162) réalise en particulier la au moins une instance ou fonctionnalité de bord de service - précédemment réalisée dans ou par le premier noeud de réseau de bord de service (161) - en ce qui concerne le trafic utilisateur priorisé uniquement, en particulier le trafic dans des classes de trafic spécifiques, en particulier le trafic de voix sur IP, et/ou le trafic concernant des classes de clients spécifiques.

5. Procédé selon l'une des revendications précédentes, dans lequel le trafic utilisateur priorisé est acheminé via la partie ou le module matériel de commande (1622) du second noeud de réseau de bord de service (162) au moyen de canaux de plan de données entre la partie ou le module matériel d'acheminement (1621) et la partie ou le module matériel de commande (1622) du second noeud de réseau de bord de service (162),
dans lequel, en particulier, la partie ou le module matériel d'acheminement (1621) du second noeud de réseau de bord de service (162) est préconfiguré, en particulier avant la première sous-étape de la seconde étape, de sorte que tout le trafic du plan de données est acheminé par les canaux du plan de données entre la partie ou le module matériel d'acheminement (1621) et la partie ou le module matériel de commande (1622) du second noeud de réseau de bord de service (162) .

6. Procédé selon l'une des revendications précédentes, dans lequel, au cours de la première sous-étape de la seconde étape, après la première étape et en cas de défaillance du premier noeud de réseau de bord de service (161), le procédé comprend la configuration progressive de la partie ou du module matériel d'acheminement (1621) du second noeud de réseau de bord de service (162) - en particulier au moyen d'un canal de commande entre la partie ou le module matériel de commande (1622) et la partie ou le module matériel d'acheminement (1621) du second noeud de réseau de bord de service (162) - afin de réaliser au moins une instance ou une fonctionnalité de bord de service, précédemment réalisée dans ou par le premier noeud de réseau de bord de service (161), également en ce qui concerne le trafic de plan utilisateur de priorité inférieure, et entrant ainsi progressivement dans ou réalisant la seconde sous-étape de la seconde étape au moyen des informations d'état synchronisées présentes à la fois dans la partie ou le module matériel de commande (1622) et dans la partie ou le module matériel d'acheminement (1621) du second noeud de réseau de bord de service (162).

7. Procédé selon l'une des revendications précédentes, dans lequel, au cours de la seconde étape, les informations d'état synchronisées sont d'abord présentes uniquement ou au moins principalement dans la partie ou le module matériel de commande (1622) du second noeud de réseau de bord de service (162) - et les informations d'état synchronisées ne sont pas du tout, ou au moins pas complètement, présentes dans la partie ou le module matériel d'acheminement (1621) du second noeud de réseau de bord de service (162) -, et le second noeud de réseau de bord de service (162) réalisant progressivement la au moins une instance ou fonctionnalité de bord de service, précédemment réalisée dans ou par le premier noeud de réseau de bord de service (161), au moyen d'une configuration progressive de la partie ou du module matériel d'acheminement (1621) du second noeud de réseau de bord de service (162) - en particulier au moyen d'un canal de commande entre la partie ou le module matériel de commande (1622) et la partie ou le module matériel d'acheminement (1621) du second noeud de réseau de bord de service (162).

8. Procédé selon l'une des revendications précédentes, dans lequel le point de distribution de bureau central (110) comprend une matrice de commutation (115), la matrice de commutation (115) comprenant une pluralité de noeuds de réseau troncs (171, 172, 173) et une pluralité de noeuds de réseau feuilles, dans lequel les noeuds de réseau feuilles correspondent aux noeuds de réseau de bord de service (161, 162, 163) ou les hébergent ou les co-hébergent,
dans lequel en particulier le point de distribution de centre de commutation (110) et/ou le réseau d'accès à large bande (120) comprend (comprennent) une pluralité de noeuds de terminaison de ligne (151), dans lequel chacun des noeuds de terminaison de ligne (151) est connecté à au moins deux noeuds de réseau de bord de service de la pluralité de noeuds de réseau de bord de service (161, 162, 163), dans lequel en particulier chacun des noeuds de réseau de bord de service de la pluralité de noeuds de réseau de bord de service (161, 162, 163) est connecté à au moins deux noeuds de réseau troncs de la pluralité de noeuds de réseau troncs (171, 172, 173) .

9. Réseau d'accès à large bande (120) ou réseau de télécommunications (100) pour un fonctionnement amélioré d'un réseau d'accès à large bande (120) d'un réseau de télécommunications (100) et/ou pour un fonctionnement amélioré et/ou plus fiable du réseau d'accès à large bande (120), le réseau d'accès à large bande (120) comprenant un point de distribution de centre de commutation (110) avec une pluralité de noeuds de réseau de bord de service (161, 162, 163), chacun des noeuds de réseau de bord de service (161, 162, 163) réalisant au moins une instance ou une fonctionnalité de bord de service, terminant une liaison de communication client vers un équipement des locaux d'abonné ou un noeud d'accès (151),
dans lequel un premier noeud de réseau de bord de service (161) et un second noeud de réseau de bord de service (162) comprennent respectivement une partie ou un module matériel d'acheminement (1611, 1621) et une partie ou un module matériel de commande (1612, 1622), dans lequel la au moins une instance ou fonctionnalité de bord de service, réalisée dans ou par le premier noeud de réseau de bord de service (161) et opérationnelle à un moment donné, correspond à des informations d'état, à ce moment-là ou pour ce moment-là, à la fois dans la partie ou le module matériel d'acheminement (1611), et dans la partie ou le module matériel de commande (1612) du premier noeud de réseau de bord de service (161),
dans lequel, afin d'améliorer et/ou de rendre plus fiable le fonctionnement du point de distribution de centre de commutation (110), le réseau d'accès à large bande (120) ou le réseau de télécommunications (100) est configuré de telle sorte que :
- les informations d'état concernant la au moins une instance ou fonctionnalité de bord de service réalisée dans ou par le premier noeud de réseau de bord de service (161) sont synchronisées en continu au moins avec la partie ou le module matériel de commande (1622) du second noeud de réseau de bord de service (162),
- en cas de défaillance du premier noeud de réseau de bord de service (161), le second noeud de réseau de bord de service (162) réalise la au moins une instance ou fonctionnalité de bord de service - précédemment réalisée dans ou par le premier noeud de réseau de bord de service (161) - au moyen de l'utilisation des informations d'état synchronisées en continu, dans lequel, en cas de défaillance du premier noeud de réseau de bord de service (161), le trafic utilisateur priorisé est acheminé par l'intermédiaire de la partie ou du module matériel de commande (1622) du second noeud de réseau de bord de service (162).

10. Noeud de réseau de bord de service (161, 162, 163) pour un fonctionnement amélioré d'un réseau d'accès à large bande (120) d'un réseau de télécommunications (100) et/ou pour un fonctionnement amélioré et/ou plus fiable du réseau d'accès à large bande (120) ou du réseau de télécommunications (100) selon la revendication 9.

11. Système pour un fonctionnement amélioré d'un réseau d'accès à large bande (120) d'un réseau de télécommunications (100) et/ou pour un fonctionnement amélioré et/ou plus fiable du réseau d'accès à large bande (120), le réseau d'accès à large bande (120) comprenant un point de distribution de centre de commutation (110) avec une pluralité de noeuds de réseau de bord de service (161, 162, 163), chacun des noeuds de réseau de bord de service (161, 162, 163) réalisant au moins une instance ou une fonctionnalité de bord de service, terminant une liaison de communication client vers un équipement des locaux d'abonné ou un noeud d'accès (151),
dans lequel un premier noeud de réseau de bord de service (161) et un second noeud de réseau de bord de service (162) comprennent respectivement une partie ou un module matériel d'acheminement (1611, 1621) et une partie ou un module matériel de commande (1612, 1622), dans lequel la au moins une instance ou fonctionnalité de bord de service, réalisée dans ou par le premier noeud de réseau de bord de service (161) et opérationnelle à un moment donné, correspond à des informations d'état, à ce moment-là ou pour ce moment-là, à la fois dans la partie ou le module matériel d'acheminement (1611), et dans la partie ou le module matériel de commande (1612) du premier noeud de réseau de bord de service (161),
dans lequel, afin d'améliorer et/ou de rendre plus fiable le fonctionnement du point de distribution de centre de commutation (110), le système est configuré de telle sorte que :
- les informations d'état concernant la au moins une instance ou fonctionnalité de bord de service réalisée dans ou par le premier noeud de réseau de bord de service (161) sont synchronisées en continu au moins avec la partie ou le module matériel de commande (1622) du second noeud de réseau de bord de service (162),
- en cas de défaillance du premier noeud de réseau de bord de service (161), le deuxième noeud de réseau de bord de service (162) réalise l'au moins une instance ou fonctionnalité de bord de service - précédemment réalisée dans ou par le premier noeud de réseau de bord de service (161) - au moyen de l'utilisation des informations d'état synchronisées en continu, dans lequel, en cas de défaillance du premier noeud de réseau de bord de service (161), le trafic utilisateur priorisé est acheminé via la partie ou le module matériel de commande (1622) du deuxième noeud de réseau de bord de service (162).

12. Programme comprenant un code de programme lisible par ordinateur qui, lorsqu'il est exécuté sur un ordinateur et/ou sur un noeud de réseau de bord de service (161, 162, 163) et/ou sur un noeud de réseau d'une matrice de commutation (115), ou en partie sur le noeud de réseau de bord de service (161, 162, 163) et en partie sur un noeud de réseau d'une matrice de commutation (115), amène l'ordinateur et/ou le noeud de réseau de bord de service (161, 162, 163) et/ou le noeud de réseau de la matrice de commutation (115) à exécuter un procédé selon l'une des revendications 1 à 8.

13. Support lisible par ordinateur comprenant des instructions qui, lorsqu'elles sont exécutées sur un ordinateur et/ou sur un noeud de réseau de bord de service (161, 162, 163) et/ou sur un noeud de réseau d'une matrice de commutation (115), ou en partie sur le noeud de réseau de bord de service (161, 162, 163) et en partie sur un noeud de réseau d'une matrice de commutation (115), amènent l'ordinateur et/ou le noeud de réseau de bord de service (161, 162, 163) et/ou le noeud de réseau de la matrice de commutation (115) à exécuter un procédé selon l'une des revendications 1 à 8.
